# EUROPEAN PATENT SPECIFICATION

(11) **EP 3 522 315 B1**
(45) Date of publication and mention of the grant of the patent: **14.04.2021**
(21) Application number: 19150956.1
(22) Date of filing: 09.01.2019
(51) Int. Cl.: H02G 3/06, E05D 7/10

(54) **CONNECTION DEVICE FOR CONNECTING TWO CABLE TRAY SEGMENTS AT A VARIABLE ANGLE**
VERBINDUNGSVORRICHTUNG ZUM VERBINDEN VON ZWEI KABELRINNENSEGMENTEN IN EINEM VARIABLEN WINKEL
DISPOSITIF DE CONNEXION POUR CONNECTER DEUX SEGMENTS DE CHEMINS DE CÂBLE À UN ANGLE VARIABLE

(30) Priority: 01.02.2018 ES 201830133 U
(43) Date of publication of application: 07.08.2019
(73) Proprietor: Unex Aparellaje Electrico S.L., 08903 L'Hospitalet de Llobregat (Barcelona) (ES)
(72) Inventor: MOSTAZO OVIEDO, José Antonio, 08903 L'Hospitalet de Llobregat (ES)
(74) Representative: Curell Suñol S.L.P.

(56) References cited:
- AU-A1- 2004 216 622
- US-A- 2 656 999
- US-A- 5 127 132
- US-A- 5 455 987
- US-A1- 2010 086 348
- Anonymous: "Fiberglass Cable Tray Product Catalog", , 31 December 2017 (2017-12-31), XP055555021, Retrieved from the Internet: URL:http://www.copecabletray.com/pdf/cp_co peglas_cat_0704.pdf [retrieved on 2019-02-12]

## Description

### Field of the Invention

The invention is comprised in the field of cable trays that are normally used for guiding electric cables, optical fiber cables, or cables of another type going through a space.

The invention relates to an assembly comprising two cable tray segments and a connection device connecting said cable tray segments at a variable angle, said connection device comprising two monoblock rigid parts made of a polymeric material which are attached to one another in an articulated manner by means of a hinging articulation and each of them having a fitting end for fitting with a corresponding end of a cable tray segment.

### State of the Art

In known connection devices for connecting, at a variable angle, two cable tray segments provided with a hinging articulation, this articulation has a metal pin which constitutes the axis of rotation thereof. Getting rid of metal elements in the connection device is desired so that all the components of the cable tray installation, comprising both the different cable tray segments and the connection devices, can be made of a polymeric material, preferably an electrical insulating material. The applicant has previously developed a connection device for connecting two cable trays segments at a variable angle described in document ES1097659U, which device consists of a single part made of a polymeric material in which the articulation function is performed by a flexible, plate-shaped central portion. When two cable tray segments are connected at an angle by means of this connection device, the elastic bending of the plate-shaped central portion creates a return torque. In certain cable tray installations, this return torque is not desirable because it may hinder the operation of placing the connection device. Documents XP055555021, US 2010/086348A1,

US2656999A disclose known connection devices requiring the use of an external pin. Documents US5455987A, US5127132A, AU2004216622A1 show different type of hinges.

### Description of the Invention

The purpose of the invention is to provide a connection device for connecting two cable tray segments at a variable angle, which device is devoid of metal elements and allows varying the connection angle without creating a return torque.

This purpose is achieved by means of an assembly according to claim 1.

As a result of this solution, the hinging articulation is formed by means of the simple joining of the two separable parts, without having to incorporate a metal pin. The function of the pin is performed by the rods of the two parts which are aligned in the assembled position, thereby constituting the axis of articulation of the hinging articulation, and with respect to which the second hook-shaped ears can freely rotate. The hinging articulation thus formed by the fitting of the first and second ears works like a conventional hinging articulation which allows rotation about the axis of articulation without exerting any torque. As will be seen below in the detailed description of an embodiment, the two parts are readily assembled and disassembled by means of a simple translational movement. Furthermore, once the two parts are assembled by means of said translational movement, a relative rotation between said two parts with respect to the axis of articulation places said two parts in a position in which the second ears of each of the two parts retain the corresponding rod of the other part in a different direction, thereby preventing the disassembly of the two parts. Therefore, the articulation formed by the joining of the two parts cannot be disassembled except in a given position in which the mentioned translational movement can be performed.

In preferred embodiments, the fitting end of each of the two parts comprises a planar base, intended for resting on a corresponding planar surface of an end of a cable tray segment, and the channel of the second hook-shaped ears is oriented such that, in said translational movement for assembling together the attachment ends of the two parts, said planar bases of the two parts form an angle smaller than or equal to 45° with respect to one another. Preferably, said angle is smaller than or equal to 30°, and more preferably said angle is a null angle. It is therefore assured that the two parts cannot be disassembled when the connection device is in the usage position connecting two cable trays which form an obtuse angle with respect to one another, like in the case of the most common installations, or preferably when they form an angle larger than 30°, or more preferably when they form any angle that is not a null angle.

Preferably, the two parts are identical to one another, so a significant reduction in manufacturing, storage, and distribution costs is obtained. The assembly process performed by the end user or ex-works is also made easier because it is not necessary to choose two different parts to constitute the connection device.

The invention also comprises other detail features shown in the following detailed description of an embodiment of the invention and in the attached drawings.

### Brief Description of the Drawings

The advantages and features of the invention will be seen based on the following description in which a preferred embodiment of the invention is described in a manner that is not limiting with respect to the main claim, in reference to the attached drawings.
Figure 1 is a perspective view of two cable tray segments connected at an angle by means of a connection device according to the invention.
Figure 2 is a partial enlarged view of Figure 1 showing the connection area between the two cable tray segments.
Figure 3 is a view similar to Figure 2, in which the two parts of the connection device have rotated with respect to the axis of the hinging articulation, such that the two cable tray segments form an angle of 180°.
Figure 4 is a perspective view of only the connection device, in the same angled position as in Figures 1 and 2.
Figure 5 is a perspective view of the connection device of Figure 4, shown from the opposite side.
Figures 6 and 7 are, respectively, a front perspective view and a rear perspective view of the single part forming each of the two identical parts of the connection device.
Figures 8, 9, and 10 are, respectively, a top plan view, a bottom plan view, and a profile view of said single part.
Figure 11 shows two separate identical parts, arranged facing one another and on parallel planes, in an initial position for initiating the translational movement which allows assembling the two parts.
Figure 12 shows the device formed by the two identical parts assembled in a final position after one of said parts has been moved towards the other part in a translational movement from the initial position of Figure 10.
Figure 13 shows the device with the two identical parts assembled forming an angle of 180°.

### Detailed Description of an Embodiment of the Invention

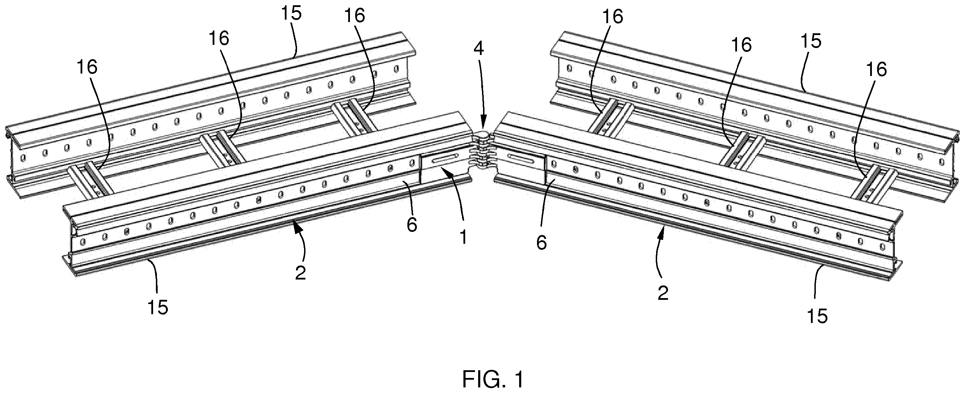

Figures 1 to 3 show a connection device 1 according to the invention which connects two cable tray segments 2 at a variable angle. In the depicted example, the two cable tray segments 2 are cable ladder segments formed by two parallel side rails 15 attached to one another by a plurality of cross members 16 spaced from one another, said two side rails 15 constituting the side walls of the cable tray and said plurality of cross members 16 constituting a discontinuous bearing surface for cables which constitutes the bottom wall of the cable tray. The side rails 15 and cross members 16 are profiles made of a polymeric material, and the ends of the cross members 16 are press fit onto the inner sides of the longitudinal members 15. The invention can likewise be applied for connecting two cable tray segments of any other type, for example, segments of a cable tray formed by a continuous channel made up of only one part.

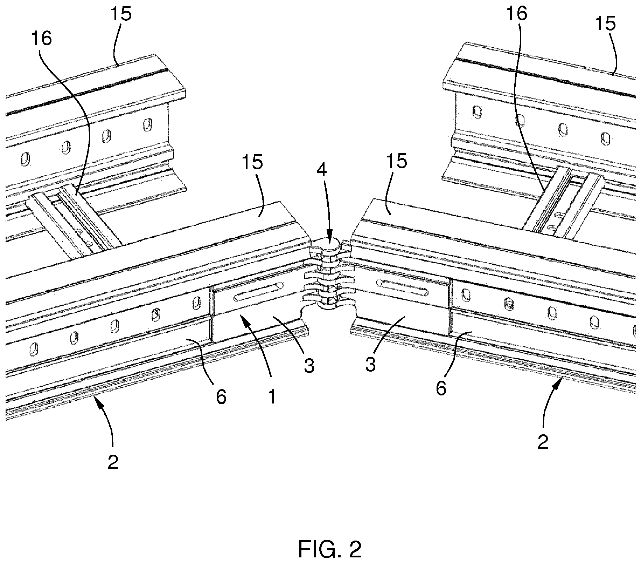

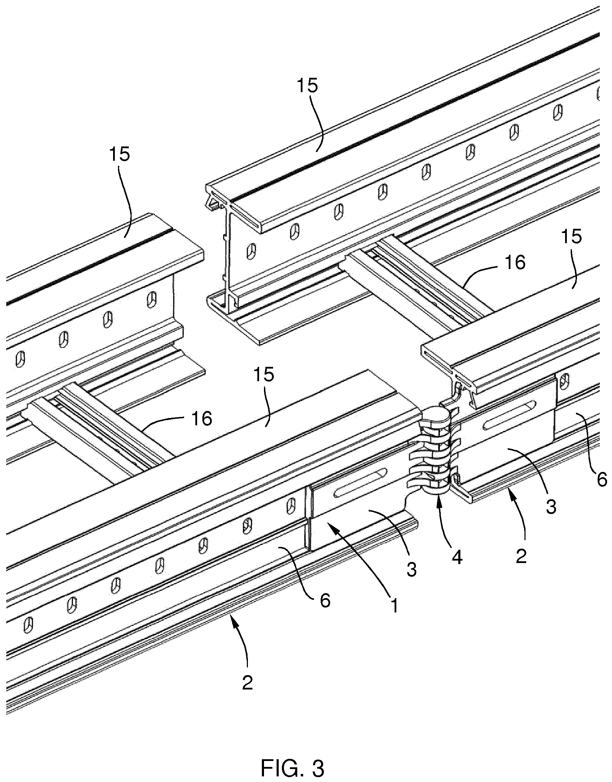

The connection device 1 allows connecting two cable ladder segments 2 at a variable angle. Figures 2 and 3 show, by way of example, two possible positions in which the two cable tray segments 2 form an obtuse angle and an angle of 180°, respectively. The angle formed by the two cable tray segments 2 can be varied at will without the connection device 1 offering any resistance, as a result of the connection device 1 comprising a hinging articulation 4.

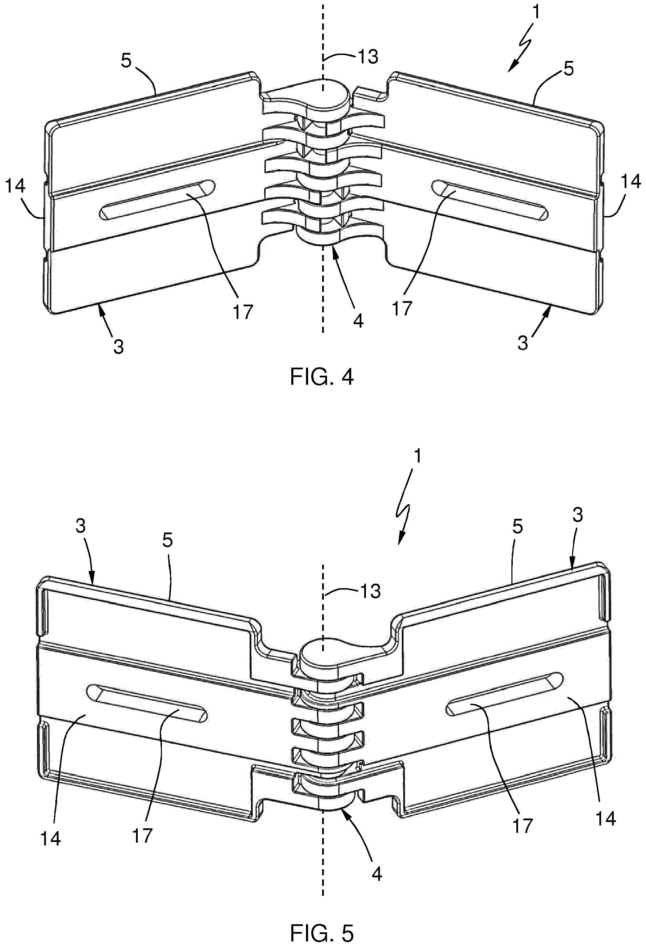

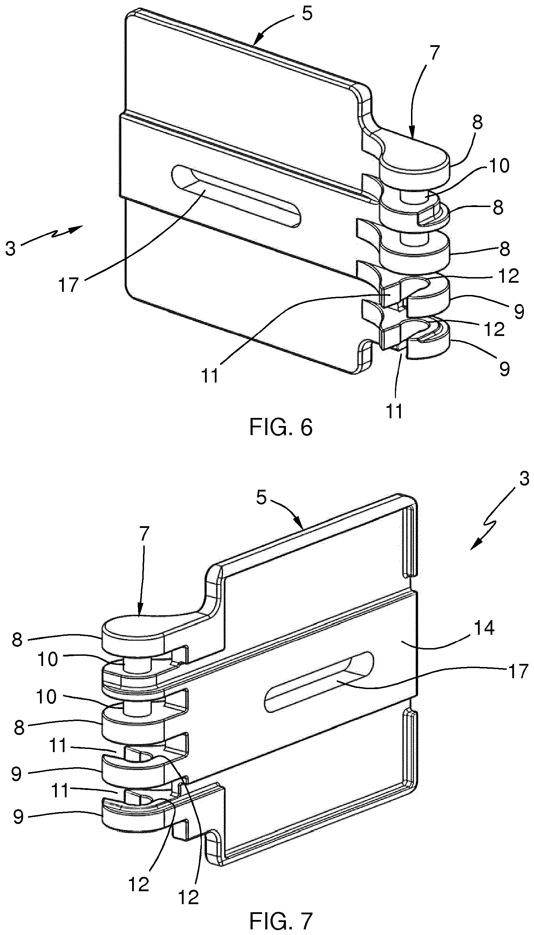

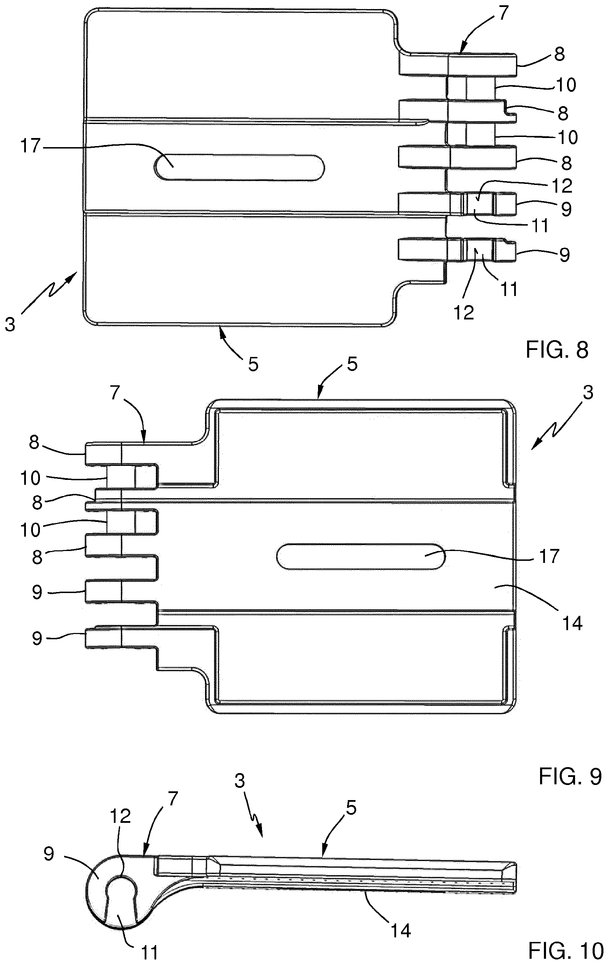

The connection device 1 is formed by the joining of two separable parts 3 which, in the example herein described, are identical. Figures 4, 5, 12, and 13 show the two identical parts 3 assembled forming the connection device 1. Figures 6 to 10 show the part 3 alone.

The part 3 is a rigid, molded monoblock part made of a polymeric material, preferably a thermoplastic material such as PVC, polycarbonate, or polypropylene. It can also be a thermosetting resin, such as glass fiber-reinforced polyester. Preferably, the polymer material is an electrical insulating material with a surface resistivity greater than 100 MΩ (surface resistivity measured according to standard EN 62631-3-2:2016).

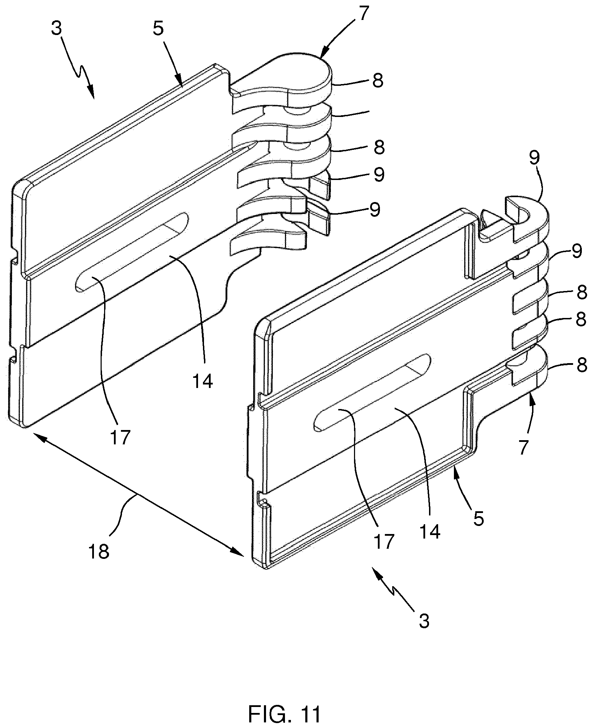

As can be seen in Figures 6 to 10, the part 3 have a fitting end 5 for fitting with a corresponding end 6 of a cable tray segment 2, and an attachment end 7 opposite the fitting end 5 formed to be assembled with the attachment end 7 of an identical part 3 and thereby constitute the hinging articulation 4 of the connection device 1. The assembly of the attachment ends 7 of the two parts 3 is performed by means of a translational movement of the two parts 3, one towards the other, said parts being positioned such that the attachment end 7 of one part 3 is moved by means of translation towards the attachment end 7 of the other part 3. In Figure 11, this translational movement is indicated by means of arrow 18.

The attachment end 7 is provided with a plurality of aligned ears 8, 9, comprising first ears 8 joined together by a rod 10 having a circular section, and second hook-shaped ears 9 defining a channel 11 the bottom 12 of which has a circular arc shape corresponding to the circular section of the rod 10. In the depicted example, the attachment end 7 has three first ears 8 joined by two rods 10 and two second ears 9. Other embodiments with different numbers of ears are naturally possible. For example, to make a connection device 1 with a greater width six first ears 8 joined by five rods 10 and five second ears 9 can be provided. On the other hand, in the depicted example the attachment end 7 has a group of first ears 8 adjacent to one another followed by a group of second ears 9 adjacent to one another; however, other embodiments with different distributions of ears 8 and 9 are possible. A distribution with groups of first ears 8 adjacent to one another alternating with groups of second ears 9 adjacent to one another can be envisaged.

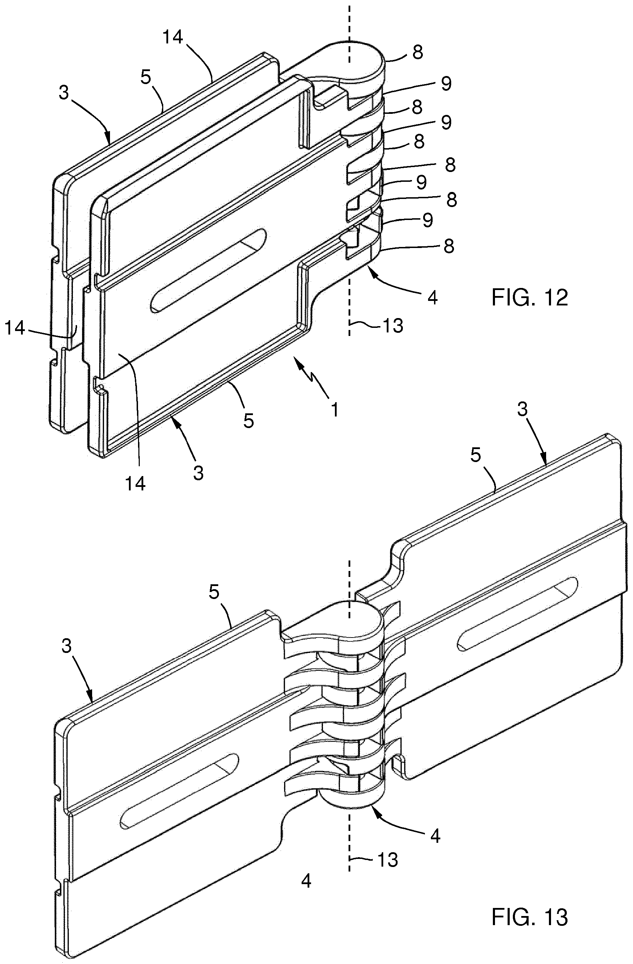

The ears 8 and 9 are formed such that, by means of the mentioned translational movement, the second ears 9 of each part 3 are introduced between the first ears 8 of the other part 3 and the rod 10 of each part 3 enters through the channel 11 of the other part 3 to a final position in which said rod 10 fits in the bottom 12 of said channel 11 with rotational freedom. In this final position shown in Figure 12, the rods 10 of the two parts 3 are aligned and constitute the axis of articulation 13 of the hinging articulation 4, since the second ears 9 can rotate freely with respect to said rods 10.

The fitting end 5 of the parts 3 can have any suitable shape for fitting with an end of a cable tray segment, depending on the shape of this cable tray segment. In the depicted embodiment, the fitting end 5 of the part 3 comprises a planar base 14 intended for resting on a corresponding planar surface of an end 6 of a cable tray segment 2. There is provided in the planar base 14 a slot 17 which extends in the longitudinal direction of the part 3 (corresponding to the longitudinal direction of the cable tray segment 2) and allows optionally fixing the fitting end 5 of the part 3 to the end 6 of the cable tray segment 2 by means of screwing. On the other hand, in the depicted embodiment the channel 11 of the second hook-shaped ears 9 is oriented such that in the mentioned translational movement for assembling the attachment ends 7 of the two parts 3 together in order to constitute the hinging articulation 4, the planar bases 14 of the two parts 3 form a null angle with respect to one another, as can be seen in Figures 11 and 12. To assemble the two parts 3 through their attachment ends 7, the two parts 3 are placed in the initial position shown in Figure 11 separated from one another, with the attachment ends 7 facing one another and the planar bases 14 forming a null angle. In this initial position, the channels 11 of each of the parts 3 are arranged facing the rods 10 of the other part 3. One part 3 is then brought closer to the other part by means of the translational movement indicated by arrow 18 of Figure 11, to the final position shown in Figure 12. In this final position, the rods 10 are aligned and fitted in the bottom 12 of the corresponding channels 11 with rotational freedom, i.e., the second ears 9 can rotate with respect to the axis of articulation 13 formed by said aligned rods 10.

From this same position, the two parts 3 can be disassembled again by performing a translational movement in the same direction as the preceding direction indicated by arrow 18, but in the opposite sense. On the other hand, from this same position the two parts 3 can be rotated with respect to the axis of articulation 13 to define a variable angle between said parts 3, for example, the angle of 180° shown in Figure 13, the obtuse angle shown in Figures 4 and 5, or any other angle. The two parts 3 cannot be disassembled in all the positions other than the one shown in Figure 12, in which the two parts 3 form an angle that is not a null angle. In fact, after performing a relative rotation of the two parts 3 with respect to the axis of articulation 13 from the position shown in Figure 12, the second ears 9 of one of the two parts 3 retain the corresponding rods 10 of the other part 3 in one direction, whereas the second ears 9 of the other one of the two parts 3 retain the corresponding rods 10 of the first part 3 in a different direction, thereby preventing the disassembly of the two parts 3. The two parts 3 can only be disassembled when they form a null angle like in Figure 12. This property provides safety as it assures that the two parts 3 cannot be disassembled when the connection device 1 is in the usage position connecting two cable tray segments 2 forming an angle that is not a null angle. In other embodiments, the channels 11 of the second hook-shaped ears 9 may be oriented such that in the translational movement for assembling the attachment ends 7 of the two parts 3 together in order to constitute the hinging articulation 4, the planar bases 14 of the two parts 3 form an angle that is not a null angle with respect to one another, said angle preferably being smaller than 45° and more preferably smaller than 30°.

## Claims

1. Assembly comprising two cable tray segments (2) and a connection device (1) connecting said two cable tray segments (2) at a variable angle, said connection device (1) comprising two monoblock rigid parts (3) made of a polymeric material which are attached to one another in an articulated manner by means of a hinging articulation (4) having an axis of articulation (13), and each of said two parts (3) having a fitting end (5) for fitting with a corresponding end (6) of a cable tray segment (2), wherein said two parts (3) are separable from one another and each comprises an attachment end (7) opposite said fitting end (5), said attachment ends (7) being formed such that they are assembled together by means of a translational movement of one end towards the other end, such that the assembly of said attachment ends (7) constitutes said hinging articulation (4), said attachment end (7) of each of the two parts (3) being provided with a plurality of aligned ears (8, 9), said plurality of ears (8, 9) comprising first ears (8) joined together by a rod (10) and second hook-shaped ears (9) defining a channel (11) with a bottom (12), said first and second ears (8, 9) being formed such that by means of said translational movement, the second ears (9) of each of said two parts (3) are introduced between the first ears (8) of the other one of said two parts (3) and said rod (10) of each of said two parts (3) enters through said channel (11) of the other one of said two parts (3) to a final position in which said rod (10) fits in the bottom (12) of said channel (11) with rotational freedom, such that in said final position said rods (10) of the two parts (3) are aligned, constituting said axis of articulation (13) of the hinging articulation (4) and said second ears (9) can rotate freely with respect to said rods (10).

2. The assembly according to claim 1, **characterized in that** said fitting end (5) of each of the two parts (3) comprises a planar base (14), intended for resting on a corresponding planar surface of an end (6) of a cable tray segment (2), and **in that** said channel (11) of said second hook-shaped ears (9) is oriented such that in said translational movement for assembling said attachment ends (7) of the two parts (3) together, said planar bases (14) of the two parts (3) form an angle smaller than or equal to 45° with respect to one another.

3. The assembly according to claim 2, **characterized in that** said angle is smaller than or equal to 30°.

4. The assembly according to claim 2, **characterized in that** said angle is a null angle.

5. The assembly according to any one of claims 1 to 4, **characterized in that** said two parts (2) are identical to one another.

## Patentansprüche

1. Baugruppe, die zwei Kabelträgersegmente (2) und eine Verbindungsvorrichtung (1) umfasst, welche die beiden Kabelträgersegmente (2) in einem variablen Winkel verbindet, wobei die Verbindungsvorrichtung (1) zwei starre Monoblockteile (3) umfasst, die aus einem Polymermaterial hergestellt sind, und die mittels eines Scharniergelenks (4) mit einer Gelenkachse (13) gelenkig aneinander verbindet sind, und jedes der beiden Teile (3) ein Passende (5) zum Einpassen mit einem entsprechendes Ende (6) eines Kabelträgersegments aufweist, wobei die beiden Teile (3) voneinander trennbar sind und jeweils ein Verbindungsende (7) gegenüber dem Passende (5) aufweisen, wobei die Verbindungsenden (7) so geformt sind, dass sie mittels einer Translationsbewegung eines Endes in Richtung des anderen Endes zusammengefügt werden, sodass die Baugruppe der Verbindungsenden (7) das Scharniergelenk (4) bildet, wobei das Verbindungsende (7) jedes der beiden Teile (3) mit einer Mehrzahl von ausgerichteten Ohren (8, 9) versehen ist, wobei die Mehrzahl der Ohren (8, 9) erste Ohren, die durch einen Stab (10) miteinander verbunden sind, und zweite hakenförmige Ohren (9), die einen Kanal mit dem Boden (12) definieren, umfasst, wobei die ersten und zweiten Ohren (8, 9) so geformt sind, dass mittels der Translationsbewegung die zweiten Ohren (9) jedes der beiden Teile (3) zwischen die ersten Ohren (8) des anderen der beiden Teile (3) eingeführt werden und der Stab (10) jedes der beiden Teile (3) durch den Kanal (11) des anderen der beiden Teile (3) in eine Endposition eintritt, in der der Stab (10) mit rotatorischer Freiheit in den Boden (12) des Kanals (11) passt, sodass in der Endposition die Stäbe (10) der beiden Teile (3) ausgerichtet sind und die Gelenkachse (13) des Scharniergelenks (4) bilden und die zweiten Ohren (9) sich frei in Bezug auf die Stäbe (10) drehen können.

2. Baugruppe nach Anspruch 1, **dadurch gekennzeichnet, dass** das Passende (5) jedes der beiden Teile (3) eine ebene Basis (14) aufweist, die zum Aufliegen auf einer entsprechenden ebenen Fläche eines Endes (6) eines Kabelträgersegments (2) bestimmt ist, und dass der Kanal (11) der zweiten hakenförmigen Ohren (9) so ausgerichtet ist, dass bei der Translationsbewegung zum Zusammenfügen der Verbindungsenden (7) der beiden Teile (3) die ebenen Basen (14) der beiden Teile (3) einen Winkel kleiner oder gleich 45° zueinander bilden.

3. Die Baugruppe nach Anspruch 2, **dadurch gekennzeichnet, dass** der Winkel kleiner als oder gleich 30° ist.

4. Die Baugruppe nach Anspruch 2, **dadurch gekennzeichnet, dass** der Winkel ein Nullwinkel ist.

5. Die Baugruppe nach einem der Ansprüche 1 bis 4, **dadurch gekennzeichnet, dass** die beiden Teile (2) zueinander identisch sind.

## Revendications

1. Ensemble comprenant deux segments de chemin de câble (2) et un dispositif de connexion (1) connectant lesdits deux segments de chemin de câble (2) à un angle variable, ledit dispositif de connexion (1) comprenant deux parties rigides monoblocs (3) composées d'un matériau polymère qui sont jointes l'une à l'autre d'une manière articulée au moyen d'une articulation de charnière (4) ayant un axe d'articulation (13), et chacune desdites deux parties (3) ayant une extrémité d'ajustement (5) pour ajustement avec une extrémité (6) correspondante d'un segment de chemin de câble (2), dans lequel lesdites deux parties (3) peuvent être séparées l'une de l'autre et comprennent chacune une extrémité de jonction (7) opposée à ladite extrémité d'ajustement (5), lesdites extrémités de jonction (7) étant formées de telle sorte qu'elles sont assemblées ensemble au moyen d'un déplacement de translation d'une extrémité vers l'autre extrémité, de telle sorte que l'ensemble desdites extrémités de jonction (7) constitue ladite articulation de charnière (4), ladite extrémité de jonction (7) de chacune des deux parties (3) étant pourvue d'une pluralité d'oreilles (8, 9) alignées, ladite pluralité d'oreilles (8, 9) comprenant des premières oreilles (8) reliées ensemble par une tige (10) et des secondes oreilles en forme de crochet (9) définissant un canal (11) avec un fond (12), lesdites premières et secondes oreilles (8, 9) étant formées de telle sorte que, au moyen dudit déplacement de translation, les secondes oreilles (9) de chacune desdites deux parties (3) sont introduites entre les premières oreilles (8) de l'autre desdites deux parties (3) et ladite tige (10) de chacune desdites deux parties (3) entre à travers ledit canal (11) de l'autre desdites deux parties (3) jusqu'à une position finale dans laquelle ladite tige (10) s'ajuste dans le fond (12) dudit canal (11) avec une liberté de rotation, de telle sorte que dans ladite position finale lesdites tiges (10) des deux parties (3) sont alignées, constituant ledit axe d'articulation (13) de l'articulation de charnière (4) et lesdites secondes oreilles (9) peuvent tourner librement par rapport auxdites tiges (10).

2. Ensemble selon la revendication 1, **caractérisé en ce que** ladite extrémité d'ajustement (5) de chacune des deux parties (3) comprend une base planaire (14), destinée à reposer sur une surface planaire correspondante d'une extrémité (6) d'un segment de chemin de câble (2), et **en ce que** ledit canal (11) desdites secondes oreilles en forme de crochet (9) est orienté de telle sorte que lors dudit déplacement de translation pour assembler lesdites extrémités de jonction (7) des deux parties (3) ensemble, lesdites bases planaires (14) des deux parties (3) forment un angle inférieur ou égal à 45° l'une par rapport à l'autre.

3. Ensemble selon la revendication 2, **caractérisé en ce que** ledit angle est inférieur ou égal à 30°.

4. Ensemble selon la revendication 2, **caractérisé en ce que** ledit angle est un angle nul.

5. Ensemble selon l'une quelconque des revendications 1 à 4, **caractérisé en ce que** lesdites deux parties (2) sont identiques l'une à l'autre.
